Europäisches Patentamt

European Patent Office

Office européen des brevets

(11) Publication number: 0 298 540
A2

# (12) EUROPEAN PATENT APPLICATION

(21) Application number: 88201283.4

(22) Date of filing: 21.06.88

(51) Int. Cl.4: C07F 9/50 , B01J 31/24 , C08G 67/02

(30) Priority: 22.06.87 NL 8701449

(43) Date of publication of application:
11.01.89 Bulletin 89/02

(84) Designated Contracting States:
BE CH DE FR GB IT LI NL

(71) Applicant: SHELL INTERNATIONALE
RESEARCH MAATSCHAPPIJ B.V.
Carel van Bylandtlaan 30
NL-2596 HR Den Haag(NL)

(72) Inventor: Van Doorn, Johannes Adrianus
Badhuisweg 3
NL-1031 CM Amsterdam(NL)
Inventor: Meijboom, Nicolaas
Badhuisweg 3
NL-1031 CM Amsterdam(NL)

(74) Representative: Aalbers, Onno et al
P.O. Box 302
NL-2501 CH The Hague(NL)

(54) Preparation of phosphides.

(57) Process for the preparation of phosphides, characterized in that phosphides of the general formula $R_{14}R_{15}PM$ are prepared by the reaction in liquid ammonia of an alkali metal M with a phosphine of the general formula $R_{13}R_{14}R_{15}P$, in which general formulae $R_{13}$ represents a hydrocarbyl group which may or may not be substituted with polar groups and contains a $\diagdown C = C \diagup$ group which is linked to the phosphorus atom via only one aliphatic carbon atom, $R_{14}$ is an aryl group which may or may not be substituted with polar groups and $R_{15}$ represents a hydrocarbyl group which may or may not be substituted with polar groups, with the proviso that if $R_{15}$ contains a $\diagdown C = C \diagup$ group which is linked to the phosphorus atom via only one aliphatic carbon atom, $R_{15}$ and $R_{13}$ are similar to one another.

# PREPARATION OF PHOSPHIDES

The invention relates to a process for the preparation of phosphides which are eligible for use as starting materials in the preparation of diphosphines. The latter compounds find use as components in catalyst compositions intended for the preparation of polymers of carbon monoxide with one or more olefinically unsaturated compounds.

High molecular weight linear polymers of carbon monoxide with one or more olefinically unsaturated compounds (for the sake of brevity referred to as A) in which the monomer units occur in alternating order and which polymers therefore consist of units of the general formula -(CO)-A'-, wherein A' represents a monomer unit derived from a monomer A used, can be prepared by using catalyst compositions based upon:

a) a palladium compound,

b) an anion of an acid with a pKa of less than 6, and

c) a diphosphine of the general formula $R_1R_2P-R-PR_3R_4$, wherein $R_1$-$R_4$ represent similar or different hydrocarbyl groups and R is a bivalent bridging group containing at least two carbon atoms in the bridge.

Diphosphines which are very suited to be used as the components c) in the catalyst compositions are diphosphines in which the groups $R_1$, $R_2$, $R_3$ and $R_4$ are non-polar substituted aryl groups which are similar to one another and which therefore can be represented by the general formula $(R_5)_2P-R-P-(R_5)_2$. The preparation of the latter diphosphines can be carried out either by the reaction of an alkali metal diaryl phosphide $(R_5)_2PM$ with a dihalo compound X-R-X, or by the reaction of an aryl alkali metal compound $R_5M$ with a tetrahalo-diphosphine $X_2P-R-PX_2$. For instance, 1,3-bis-(diphenyl-phosphino)propane can be prepared either by the reaction of $(C_6H_5)_2PNa$ with Cl-$(CH_2)_3$-Cl, or by the reaction of $C_6H_5Li$ with $Cl_2P-(CH_2)_3$-$PCl_2$. In view of the simple one-stage synthesis leading to the phosphorus-containing starting material for the first method of preparation, viz. by reaction in liquid ammonia of an alkali metal M with a triaryl phosphine $(R_5)_3P$, and the very cumbersome multi-stage synthesis to the phosphorus-containing starting material for the second method of preparation, the first method of preparation is much to be preferred.

In the past, the Applicant has carried out an investigation into the above catalyst compositions. This investigation has shown that their performance can be considerably enhanced by the incorporation of a diphosphine of the general formula $R_6R_7P-R-PR_8R_9$, wherein $R_6$, $R_7$, $R_8$ and $R_9$ represent similar or different hydrocarbyl groups which may or may not be substituted with polar groups, with the proviso that at least one of groups $R_6$, $R_7$, $R_8$ and $R_9$ contains at least one polar substituent, and wherein R has the meaning given hereinbefore. Diphosphines which are very suited to be used as components c) in the catalyst compositions are diphosphines in which the groups $R_6$, $R_7$, $R_8$ and $R_9$ are polar-substituted aryl groups which are similar to one another and which can therefore be represented by the general formula $(R_{10})_2P-R-P-(R_{10})_2$. Comparison of the performances of catalyst compositions containing as component c) a diphosphine of the general formula $(R_5)_2P-R-P(R_5)_2$ with corresponding catalyst compositions containing as component c) a diphosphine of the general formula $(R_{10})_2P-R-P(R_{10})_2$ shows that at similar reaction rates for both compositions, the compositions having a polar-substituted diphosphine afford polymers with higher molecular weights and, alternatively, that when the two compositions are employed for preparing polymers with equal molecular weights, the compositions containing a polar-substituted diphosphine lead to higher reaction rates.

The Applicant has carried out an investigation into the preparation of polar-substituted diphosphines of the general formula $(R_{10})_2P-R-P-(R_{10})_2$. Since neither for the polar-substitu-ted diphosphines of the general formula $(R_{10})_2P-R-P-(R_{10})_2$, nor for the non-polar substituted diphosphines of the general formula $(R_5)_2P-R-P-(R_5)_2$, preparation by reacting an aryl alkali metal compound with a tetrahalo diphosphine is a very attractive method on account of the very cumbersome multi-stage synthesis of the required phosphorus-containing starting materials, the investigation carried out by the Applicant was directed at the method mentioned earlier for the preparation of non-polar substituted diphosphines, by reacting an alkali metal diaryl phosphide with a dihalo compound.

As was stated hereinbefore in the discussion of the preparation of non-polar substituted diphosphines, the phosphorus-containing starting materials required for the synthesis thereof can be simply obtained by the reaction in liquid ammonia of an alkali metal M with a triaryl phosphine $(R_5)_3P$. The investigation has shown that this method is suited both for the preparation of alkali metal diaryl phosphides in which the aryl groups bear no substituents, such as sodium diphenyl phosphide, and for the preparation of alkali metal diaryl phosphides in which the aryl groups bear non-polar substituents, such as methyl groups. Examples of such alkali metal diaryl phosphides are sodium di(2-methyl-phenyl) phosphide, sodium di(3-methyl-phenyl) phosphide and sodium di(4-methyl-phenyl) phosphide. It was seen that in comparison with the preparation of sodium diphenyl phosphide from triphenyl phosphine, in which a quantitative conversion can be reached, the corresponding preparation of diaryl phosphides whose aryl groups contain one or more non-polar substituents normally proceeds at lower yields, which are, however, still amply sufficient for this method of preparation to be used on a technical scale. The investigation into the application of the above method to the preparation of alkali metal diaryl phosphides in which the aryl groups contain one or more polar substituents has shown that the position which the polar substituents occupy in respect to the phosphorus atom is of great importance. It was found for instance that the formation of the alkali metal diaryl phosphides was completely suppressed by the presence of certain polar groups, such as a dialkyl amino-group, in the para position in respect to phosphorus. The presence of other polar groups, such as an alkoxy group, in para position in respect to phosphorus led to the formation of alkali metal diaryl phosphide proceeding in a low yield. Likewise, when two or three polar substituents are present in the aryl groups, the position in which the polar substituents are found in respect to the phosphorus atom is of great importance for the successful preparation of the alkali metal diaryl phosphide. It has appeared for instance that the presence of two alkoxy groups in ortho position in respect to phosphorus sufficed for the formation of the alkali metal diaryl phosphide to proceed in a low yield, whilst the presence of an additional third alkoxy group in para position in respect to phosphorus led to complete blockage of the formation of alkali metal diaryl phosphide. Furthermore, when two methoxy groups were present in ortho and para positions in respect to phosphorus, there occurred no formation of alkali metal diaryl phosphide at all.

It was further found during the investigation that in some cases the presence of one or more polar substituents in the aryl groups of the triaryl phosphine presents no obstacles to the proceeding of the alkali metal diaryl phosphides synthesis. Thus it was found that in spite of the presence of one methoxy or tert.butoxy group in a position ortho or meta to phosphorus, the formation of the alkali metal diaryl phosphide proceeded in high to very high yields. Even when more than one polar substituents are present in the aryl groups of the triaryl phosphine, the synthesis of the alkali metal diaryl phosphide can proceed in a high to very high yield. Such a situation presents itself for instance when two methoxy groups occur in the aryl groups of the triaryl phosphine in the ortho and meta positions in respect to phosphorus.

The investigation has shown that on the basis of their suitability to serve as starting materials for the preparation of alkali metal diaryl phosphides by their reaction in liquid ammonia with an alkali metal, polar-substituted triaryl phosphines can be divided into two classes, viz.:

I. Polar-substituted triaryl phosphines from which the corresponding alkali metal diaryl phosphides can be prepared in high to very high, sometimes even quantitative, yields, and

II. Polar-substituted triaryl phosphines from which the corresponding alkali metal diaryl phosphides can only be prepared in poor to very poor yields and sometimes fail to be produced altogether.

The investigation has further shown that with regard to the positions of the polar substituents in respect to the phosphorus atom, the above two classes of polar-substituted triaryl phosphines can be defined as follows:

I. Triaryl phosphines of the general formula $(R_{11})_3P$, wherein $R_{11}$ represents an aryl group containing one or more polar substituents, which polar substituents can occupy no other positions in respect to the phosphorus atom than the two meta and one of the ortho positions, and

II. Triaryl phosphines of the general formula $(R_{12})_3P$, wherein $R_{12}$ represents an aryl group containing one or more polar substituents, one of which occupies the para position and/or two of which occupy the two ortho positions in respect to the phosphorus atom.

Further research carried out by the Applicant into the preparation of alkali metal diaryl phosphides of the general formula $(R_{12})_2PM$ by the reaction in liquid ammonia of an alkali metal M with a phosphine has now surprisingly shown that alkali metal diaryl phosphides of the general formula $(R_{12})_2PM$ can be obtained in considerably higher yields when the triaryl phosphine of the general formula $(R_{12})_3P$ which was originally used as the starting material is replaced by a phosphine of the general formula $(R_{12})_2R_{13}P$, in which general formula $R_{13}$ represents a hydrocarbyl group which may or may not be substituted with polar groups and which includes a $\diagdown C = C \diagup$ group which is bound to the phosphorus atom by only one aliphatic carbon atom. The investigation has shown that phosphines in which one of the groups bound to phosphorus is an $R_{13}$ group, can be used not only as starting materials for the preparation of diaryl phosphides of the general formula $(R_{12})_2PM$ described hereinbefore, but for a much wider range of applications. For instance, it was found that diaryl phosphides of the general formula $(R_{11})_2PM$ can be obtained in high yield by the reaction in liquid ammonia of an alkali metal M with a phosphine $(R_{11})_2R_{13}P$. The phosphines in which one of the groups bound to phosphorus is an $R_{13}$ group, are also suitable for preparing non-polar-substituted diaryl phosphides. Thus, diaryl phosphides of the general formula $(R_5)_2PM$ can be prepared in high yield by the reaction in liquid ammonia of an alkali metal M with a phosphine of the general formula $(R_5)_2R_{13}P$. Besides for the preparation of phosphides in which the two groups bound to phosphorus are similar aryl groups, the phosphines in which one of the groups bound to phosphorus is an $R_{13}$ group can also be used for the preparation of mixed phosphides in which there occur two different groups bound to phosphorus, one of which is an aryl group. Thus, phosphides of the general formula $R_1R_5PM$, wherein $R_1$ represents an aliphatic hydrocarbon group and $R_5$ an aryl group, can be obtained in high yield by the reaction in liquid ammonia of an alkali metal M with a phosphine of the general formula $R_1R_5R_{13}P$. If desired, the phosphides can also be prepared by starting from a phosphine which comprises one aryl group and two similar groups $R_{13}$. Thus, phosphides of the general formula $R_5R_{13}PM$, wherein $R_5$ represents an aryl group, can be prepared in high yield by the reaction in liquid ammonia of an alkali metal M with a phosphine of the general formula $R_5(R_{13})_2P$.

The present patent application therefore relates to a process for the preparation of phosphides, in which process phosphides of the general formula $R_{14}R_{15}PM$ are prepared by the reaction in liquid ammonia of an alkali metal M with a phosphine of the general formula $R_{13}R_{14}R_{15}P$, in which general formula $R_{13}$ represents a hydrocarbyl group, which may or may not be substituted with polar groups, and includes a $\underset{\cdot}{\overset{\cdot}{C}} = \underset{\cdot}{\overset{\cdot}{C}}$ group which is bound to the phosphorus atom by only one aliphatic carbon atom, $R_{14}$ is an aryl group which may or may not be substituted with polar groups and $R_{15}$ represents a hydrocarbyl group which may or may not be substituted with polar groups, with the proviso that if $R_{15}$ includes a $\underset{\cdot}{\overset{\cdot}{C}} = \underset{\cdot}{\overset{\cdot}{C}}$ group which is bound to the phosphorus atom by only one aliphatic carbon atom, $R_{15}$ and $R_{13}$ are similar to one another.

The phosphides of the general formula $R_{14}R_{15}PM$ prepared by the invention are in the first place intended for use as starting materials for the preparation of diphosphines of the general formula $R_{14}R_{15}P-R-PR_{14}R_{15}$, i.e. diphosphines in which the two groups attached to the one phosphorus atom are the same as the two groups attached to the other phosphorus atom. To this end, the phosphides can be reacted with a dihalo compound of the general formula X-R-X, wherein X represents chlorine or bromine. The phosphides of the general formula $R_{14}R_{15}PM$ prepared according to the invention are also suited to be used as the starting material for the preparation of diphosphines of the general formula $R_{14}R_{15}P-R-PR_{16}R_{17}$, wherein $R_{16}$ and $R_{17}$ represent hydrocarbyl groups which may contain polar substituents. To this end, the phosphides can be reacted with a monohalo compound of the general formula $X-R-PR_{16}R_{17}$.

The present patent application further relates to novel catalyst compositions based upon

a) a palladium compound,

b) an anion of an acid with a pKa of less than 6, and

c) any one of the diphosphines prepared in the manner described hereinbefore.

Finally, the present patent application relates to the use of these novel catalyst compositions in the preparation of polymers of carbon monoxide with one or more olefinically unsaturated compounds, as well as to the polymers thus prepared and shaped objects consisting at least partly of these polymers.

In the process of the invention, compounds of the general formula $R_{14}R_{15}PM$ are prepared by starting from compounds of the general formula $R_{13}R_{14}R_{15}P$. In the general formulae, $R_{14}$ is preferably an optionally polar-substituted phenyl group. Especially preferred are compounds in which $R_{14}$ is a polar-sub-stituted phenyl group containing up to three polar substituents. If the aryl groups $R_{14}$ has two or more polar substituents, these polar substituents may be similar or different. Preference is given to similar polar substituents. Eligible polar substituents include dialkyl-amino groups, such as dimethyl-amino groups and alkyl groups, such as methoxy and tert.butoxy groups. The polar substituents present in the aryl groups $R_{14}$ are preferably one or more alkoxy groups and more particularly, one or more methoxy groups. Examples of suitable polar-substituted aryl groups $R_{14}$ are 2-methoxy-phenyl, 4-methoxy-phenyl, 2,6-dimethoxy-phenyl, 2,4,6-trimethoxy-phenyl and 4-dimethyl-amino-phenyl groups. Examples of suitable non-polar-substituted aryl groups $R_{14}$ are phenyl and 4-trimethyl-silyl-phenyl groups.

In the general formula, $R_{15}$ is preferably similar to $R_{13}$ or similar to $R_{14}$, i.e. in the process of the invention the starting material is preferably a phosphine of the general formula $(R_{13})_2R_{14}P$ or $R_{13}(R_{14})_2P$. Group $R_{13}$, which is present in the starting phosphine and optionally also in the ready phosphine, is preferably a benzyl group or an allyl group.

Phosphines of the general formula $R_{13}(R_{14})_2P$, in which $R_{13}$ is a benzyl or an allyl group and $R_{14}$ is a polar-substituted phenyl group containing up to three polar substituents, are novel compounds.

The preparation of the phosphides according to the invention is carried out by the reaction in liquid ammonia of an alkali metal M with a phosphine. Alkali metals that can be used are lithium, potassium and sodium. Preference is given to the use of sodium as the alkali metal. It is preferred to employ about 2 mol of alkali metal per mol of phosphine to be converted. The quantity of liquid ammonia may vary within wide ranges. It is preferred to employ 1 to 125 ml and in particular 10 to 40 ml of liquid ammonia per mmol of alkali metal. In view of the fact that at atmospheric pressure liquid ammonia boils at about -33°C, the process if carried out at an atmospheric pressure, should be carried out below -33°C. Preferably, the process is carried out at temperature of from -100 to -35°C and in particular of from -80 to -35°C. If the process of the invention is carried out under pressure, temperatures above -33°C may be employed, if desired.

As was stated hereinbefore, the present patent application also relates to novel catalyst compositions for the preparation of polymers of carbon monoxide with one or more olefinically unsaturated compounds, which catalyst compositions are based upon

    a) a palladium compound,
    b) an anion of an acid with a pKa of less than 6, and
    c) any one of the diphosphines prepared in the manner described hereinbefore.

The palladium compound employed in the catalyst compositions as component a) is preferably a palladium salt of a carboxylic acid and in particular palladium acetate. The component b) used in the catalyst compositions is preferably an anion of an acid with a pKa of less than 4 (determined in aqueous solution at 18°C) and in particular an anion of an acid with a pKa of less than 2. More specifically preferred is an anion of a sulphonic acid, such as para-toluenesulphonic acid or an anion of a carboxylic acid, such as trifluoro acetic acid. Component b) can be incorporated in the catalyst compositions in the form of an acid and/or in the form of a salt. Eligible salts include non-noble transition metal salts, such as copper salts. The component c) that is preferably used in the catalyst compositions is a diphosphine in which the bivalent bridging group R is a $-(CH_2)_3-$ group. If desired, components a) and b) can be used combined in a single compound. An example of such a compound is the complex $Pd(CH_3CN)_2(O_3S-C_6H_4-CH_3)_2$, which can be prepared by the reaction of palladium chloride with the silver salt of para-toluenesulphonic acid in acetonitrile as the solvent. In addition to components a), b) and c), the catalyst compositions may also include promoters. For this purpose, a 1,4-quinone and in particular a 1,4-naphthoquinone, is used by preference.

Eligible olefinically unsaturated compounds which can be polymerized with carbon monoxide by using the catalyst compositions described hereinbefore are both compounds which consist exclusively of carbon and hydrogen and compounds which, in addition to carbon and hydrogen, comprise one or more hetero atoms. Preference is given to the preparation of polymers of carbon monoxide with one or more olefinically unsaturated hydrocarbons. Examples of suitable hydrocarbon monomers are ethene and other α-olefins, such as propene, butene-1, hexene-1 and octene-1. The catalyst compositions of the invention are particularly suited to be used for the preparation of copolymers of carbon monoxide with ethene and for the preparation of terpolymers of carbon monoxide with ethene and another olefinically unsaturated hydrocarbon, such as propene. The polymerization is preferably carried out at a temperature of 20-200°C and a pressure of 1-200 bar and in particular at a temperature of 30-150°C and a pressure of 20-100 bar. The polymerization is typically carried out by contacting the monomers with a solution of the catalyst composition in an organic liquid in which the polymers are insoluble. If desired, the polymerization may be carried out in the gaseous phase.

The invention is now illustrated with the aid of the following examples.

Example 1

Sodium diphenyl phosphide was prepared as follows. To 100 ml of liquid ammonia present in a mechanically stirred reaction vessel which was kept at -78°C by cooling, were successively added 8 mmol of sodium and 4 mmol of benzyl-diphenyl phosphine. After 4 hours, 4 mmol of ammonium chloride was added to the reaction mixture. After 15 minutes the ammonia was evaporated away. Analysis of the residue obtained showed that 97% of the benzyl-diphenyl phosphine had been converted into sodium diphenyl phosphide.

Example 2

Sodium di(4-trimethyl-silyl-phenyl) phosphide was prepared substantially in the same way as the sodium diphenyl phosphide of Example 1, except that instead of benzyl-diphenyl phosphine, benzyl-di(4-trimethyl-silyl-phenyl) phosphine was used. The benzyl-di(4-trimethyl-silyl-phenyl) phosphine was found to have been converted into sodium di-(4-trimethyl-silyl-phenyl) phosphide quantitatively.

## Example 3

Sodium di(2-methoxy-phenyl) phosphide was prepared substantially in the same way as the sodium diphenyl phosphide of Example 1, except that instead of benzyl-diphenyl phosphine, benzyl-di(2-methoxy-phenyl) phosphine was used. Of the benzyl-di(2-methoxy-phenyl) phosphine, 89% was found to have been converted into sodium di(2-methoxy-phenyl) phosphide.

## Example 4

Sodium di(4-methoxy-phenyl) phosphide was prepared substantially in the same way as the sodium diphenyl phosphide of Example 1, except that instead of benzyl-diphenyl phosphine, benzyl-di(4-methoxy-phenyl) phosphine was used. Of the benzyl-di(4-methoxy-phenyl) phosphine, 95% was found to have been converted into sodium di(4-methoxy-phenyl) phosphide.

## Example 5

Sodium di(4-methoxy-phenyl) phosphide was prepared substantially in the same way as the sodium diphenyl phosphide of Example 1, except that instead of benzyl-diphenyl phosphine, allyl-di-(4-methoxy-phenyl) phosphine was used. Of the allyl-di(4-methoxy-phenyl) phosphine, 99% was found to have been converted into sodium di(4-methoxy-phenyl) phosphide.

## Example 6

Sodium di(4-dimethyl-amino-phenyl) phosphide was prepared substantially in the same way as the sodium diphenyl phosphide of Example 1, except that instead of benzyl-diphenyl phosphine, benzyl-di(4-dimethyl-amino-phenyl) phosphine was used. Of the benzyl-di(4-dimethyl-amino-phenyl) phosphine, 14% was found to have been converted into sodium di(4-dimethyl-amino-phenyl) phosphide.

## Example 7

Sodium di(2,6-dimethoxy-phenyl) phosphide was prepared substantially in the same way as the sodium diphenyl phosphide of Example 1, except that instead of benzyl-diphenyl phosphine, benzyl-di(2,6-dimethoxy-phenyl) phosphine was used. Of the benzyl-di(2,6-dimethoxy-phenyl) phosphine, 99% was found to have been converted into sodium di(2,6-dimethoxy-phenyl) phosphide.

## Example 8

Sodium di(2,4,6-trimethoxy-phenyl) phosphide was prepared substantially in the same way as the sodium diphenyl phosphide of Example 1, except that instead of benzyl-diphenyl phosphine, benzyl-di(2,4,6-trimethoxy-phenyl) phosphine was used. Of the benzyl-di(2,4,6-trimethoxy-phenyl) phosphine, 89% was found to have been converted into sodium di(2,4,6-trimethoxy-phenyl) phosphide.

## Example 9

Sodium phenyl-benzyl phosphide was prepared substantially in the same way as the sodium diphenyl phosphide of Example 1, except that instead of benzyl-diphenyl phosphine, phenyl-dibenzyl phos-phine was used. Of the phenyl-dibenzyl phosphine, 88% was found to have been converted into sodium phenyl-benzyl phosphide.

## Example 10

Sodium di(4-methoxy-phenyl) phosphide was prepared substantially in the same way as the sodium diphenyl phosphide of Example 1, except that instead of benzyl-diphenyl phosphine, tri(4-methoxy-phenyl) phosphine was used. Of the tri(4-methoxy-phenyl) phosphine, 2% was found to have been converted into sodium di(4-methoxy-phenyl) phosphide.

## Example 11

Example 1 was substantially repeated, except that instead of benzyl-diphenyl phosphine, tri(4-dimethyl-amino-phenyl) phosphine was used. It appeared that no conversion of tri(4-dimethyl-amino-phenyl) phosphine into sodium di(4-dimethyl-amino-phenyl) phosphide had taken place.

## Example 12

Sodium di(2,6-dimethoxy-phenyl) phosphide was prepared substantially in the same way as the sodium diphenyl phosphide of Example 1, except that instead of benzyl-diphenyl phosphine, tri(2,6-dimethoxy-phenyl) phosphine was used. Of the tri-(2,6-trimethoxy-phenyl) phosphine, 20% was found to have been converted into sodium di(2,6-dimethoxy-phenyl) phosphide.

## Example 13

Example 1 was substantially repeated, except that instead of benzyl-diphenyl phosphine, tri(2,4,6-trimethoxy-phenyl) phosphine was used. It appeared that no conversion of tri(2,4,6-trimethoxy-phenyl) phosphine into sodium di(2,4,6-trimethoxy-phenyl) phosphide had taken place.

## Example 14

Example 1 was substantially repeated, except that instead of benzyl-diphenyl phosphine, tribenzyl phosphine was used. It appeared that no conversion of tribenzyl phosphine into sodium dibenzyl phosphide had taken place.

## Example 15

1,3-bis[di(2,6-dimethoxy-phenyl)phosphino] propane was prepared as follows. To 250 ml of liquid ammonia present in a mechanically stirred reaction vessel which was kept at -78° C by cooling, were successively added 22 mmol of sodium and 10.8 mmol of benzyl-di(2,6-dimethoxy-phenyl) phosphine. After 3 hours, 10.8 mmol of ammonium chloride was added to the reaction mixture. The mixture was successively heated, refluxed for 10 min and cooled to -78° C. After 5.4 mmol of 1,3-dichloro propane and 200 ml of tetrahydrofuran had been added to the reaction mixture, ammonia was evaporated away. Next, water and dichloro methane were added to the residue and the organic layer was separated, dried and filtered. Removal of the solvent afforded 2.7 g of 1,3-[di(2,6-dimethoxy-phenyl)phosphino] propane.

## Example 16

Sodium phenyl tetrahydrofurfuryl phosphide was prepared in substantially the same way as sodium diphenyl phosphide was prepared in example 1, the difference being that benzyl phenyl tetrahydrofurfuryl phosphine was employed in lieu of benzyl diphenyl phosphine. Conversion was 98%.

## Example 17

Sodium phenyl-2-methoxyethyl phosphide was prepared in substantially the same way as sodium diphenyl phosphide was prepared in example 1, the difference being that benzyl phenyl-2-methoxy ethyl phosphine was employed in lieu of benzyl diphenyl phosphine. Conversion into sodium phenyl-2-methoxyethyl phosphide was 91%. The phosphides prepared in examples 16 and 17 are novel compounds.

Of Examples 1-15, Examples 1-9 and 15 are examples according to the invention. In Examples 1-8, phosphides of the general formula $(R_{14})_2PNa$ were prepared by the reaction in liquid ammonia of sodium with a phosphine of the general formula $R_{13}(R_{14})R_2P$. In Example 9, a phosphide $R_{13}R_{14}PNa$ was prepared in this way from a phosphine $(R_{13})_2R_{14}P$. Example 15 concerns the preparation of a diphosphine of the general formula $(R_{14})_2P-(CH_2)_3-P(R_{14})_2$ by the reaction of a phosphide of the general formula $(R_{14})_2PNa$ prepared with 1,3-dichloro propane, according to the invention. Examples 10-14 are outside the scope of the invention. They have been included in the patent application for comparison. In these examples attempts were made to prepare phosphides by the conventional route, by the reaction in liquid ammonia of sodium with a phosphine in which the groups that are linked to phosphorus are similar to one another.

The advantages which the process according to the invention has over the conventional route become apparent upon comparison of the following Examples as regards thier percentage conversions into desired phosphides obtained:

Examples 4 and 5 (95 and 99%, respectively) with Example 10 (2%),

Example 6 (14%) with Example 11 (0%),

Example 7 (99%) with Example 12 (20%),

Example 8 (89%) with Example 13 (0%).

The surprising element of the process according to the invention becomes quite clear when the results of Examples 8, 13 and 14 are compared. Whereas tribenzyl phosphine and tri(2,4,6-trimethoxy-phenyl) phosphine do not split up into phosphide when treated with sodium in liquid ammonia, benzyl-di(2,4,6-trimethoxy-phenyl) phosphine is converted into the desired phosphide to an extent of 89%.

The phosphines $R_{13}(R_{14})_2P$ which were used as starting materials in Examples 2-8, benzyl-di(4-trimethyl-silyl-phenyl) phosphine, benzyl-di(2-methoxy-phenyl) phosphine, benzyl-di(4-methoxy-phenyl) phosphine, allyl-di(4-methoxy-phenyl) phosphine, benzyl-di(4-dimethyl-amino-phenyl) phosphine, benzyl-di(2,6-dimethoxy-phenyl) phosphine and benzyl-di(2,4,6-trimethoxy-phenyl) phosphine,
are novel compounds. They can be prepared by known methods of preparing related phosphines, for instance by the reaction of a compound $R_{13}PCl_2$ with either a compound $R_{14}$ magnesium bromide, or a compound $R_{14}$ lithium. The phosphides prepared according to Examples 2, 8 and 9 viz. sodium di(4-trimethyl-silyl-phenyl) phosphide, sodium di(2,4,6-trimethoxy-phenyl) phosphide and sodium benzyl-phenyl phosphide, are also novel compounds.

## Claims

1. Process for the preparation of phosphides, characterized in that phosphides of the general formula $R_{14}R_{15}PM$ are prepared by the reaction in liquid ammonia of an alkali metal M with a phosphine of the general formula $R_{13}R_{14}R_{15}P$, in which general formulae $R_{13}$ represents a hydrocarbyl group which may or may not be substituted with polar groups and contains a $\overset{\diagdown}{\underset{\diagup}{C}} = C\overset{\diagup}{\underset{\diagdown}{}}$ group which is linked to the phosphorus atom via only one aliphatic carbon atom, $R_{14}$ is an aryl group which may or may not be substituted with polar groups and $R_{15}$ represents a hydrocarbyl group which may or may not be substituted with polar groups, with the proviso that if $R_{15}$ contains a $\overset{\diagdown}{\underset{\diagup}{C}} = C\overset{\diagup}{\underset{\diagdown}{}}$ group which is linked to the phosphorus atom via only one aliphatic carbon atom, $R_{15}$ and $R_{13}$ are similar to one another.

2. Process as claimed in claim 1, characterized in that $R_{14}$ is a polar-substituted phenyl group containing one, two or three polar-substituents.

3. Process as claimed in claim 1 or 2, characterized in that $R_{14}$ contains one or more alkoxy groups, such as methoxy groups.

4. Process as claimed in one or more of claims 1-3, characterized in that the starting material is a phosphine of the general formula $(R_{13})_2R_{14}P$ or $R_{13}(R_{14})_2P$, in which $R_{13}$ is a benzyl or allyl group.

5. Process as claimed in one or more of claims 1-4, characterized in that the alkali metal M used is sodium.

6. Process for the preparation of diphosphines, characterized in that a phosphide as defined in claim 1 is reacted either with a compound of the general formula X-R-X, or with a compound of the general formula $X-R-P-R_{16}R_{17}$, in which general formulae X represents chlorine of bromine, R is a bivalent bridging group containing at least two carbon atoms in the bridge and $R_{16}$ and $R_{17}$ represent similar of different hydrocarbyl groups which may comprise polar substituents.

7. Novel catalyst compositions, characterized in that they are based upon

a) a palladium compound,

b) an anion of an acid with a pKa of less than 6, and

c) a diphosphine which has been prepared as claimed in claim 6.

8. Catalyst compositions as claimed in claim 7, characterized in that they are based upon

a) a palladium salt of a carboxylic acid, such as palladium acetate,

b) an anion of a sulphonic acid, such as para-toluenesulphonic acid, or of a carboxylic acid, such as trifluoro acetic acid,

c) a tetra(hydrocarbyl) diphosphine in which the bivalent bridging group R is a $-(CH_2)_3$ group, and

d) optionally, a promoter, such as a 1,4-quinone.

9. Process for the preparation of polymers, characterized in that a mixture of carbon monoxide with one or more olefinically unsaturated compounds is polymerized by using a catalyst composition as claimed in claim 7 or 8.

10. Novel phosphines of the general formula $R_{13}(R_{14})_2P$, wherein $R_{13}$ is a benzyl or allyl group and $R_{14}$ is a polar-substituted phenyl group containing up to three polar substituents, including but not limited to benzyl-di(2-methoxy-phenyl) phosphine, benzyl-di(4-methoxy-phenyl) phosphine, allyl-di(4-methoxy-phenyl) phosphine, benzyl-di-(2,6-dimethoxy-phenyl) phosphine, benzyl-di(2,4,6-trimethoxy-phenyl) phosphine, benzyl-di(4-dimethyl-amino-phenyl) phosphine and as novel phosphine, benzyl-di(4-trimethyl-silyl-phenyl) phosphine, and as novel phosphides, sodium di(4-trimethyl-silyl-phenyl) phosphide, sodium di(2,4,6-trimethoxy-phenyl) phosphide, sodium benzyl-phenyl phosphide, sodium phenyl-2-methoxyethyl-phosphide, sodium phenyl-tetrahydrofurfuryl phosphide.